# EUROPÄISCHE PATENTSCHRIFT

(11) **EP 3 246 207 B1**
(45) Veröffentlichungstag und Bekanntmachung des Hinweises auf die Patenterteilung: **13.02.2019**
(21) Anmeldenummer: 17176935.9
(22) Anmeldetag: 09.09.2009
(51) Int. Cl.: B60Q 1/12, B60Q 1/14

(54) **VERFAHREN UND VORRICHTUNG ZUM STEUERN VON VERTIKALEN HELL-DUNKEL-GRENZEN BEI SCHEINWERFERN**
METHOD AND DEVICE FOR CONTROLLING VERTICAL CUT-OFF LINES FOR HEADLIGHTS
PROCÉDÉ ET DISPOSITIF DE COMMANDE DE LIGNES DE COUPURE VERTICALES POUR PHARE

(30) Priorität: 13.09.2008 DE 102008047025
(43) Veröffentlichungstag der Anmeldung: 22.11.2017
(62) Teilanmeldung aus: 09782809.9
(73) Patentinhaber: HELLA GmbH & Co. KGaA, 59552 Lippstadt (DE)
(72) Erfinder: FLORISSEN, Georg, 59597 Erwitte (DE); IRMSCHER, Tobias, 59555 Lippstadt (DE); HÜSTER, Christian, 33154 Salzkotten (DE); SCHMIDT, Christian, 33106 Paderborn (DE); SCHWARZ, Sergej, 71686 Remseck (DE); WILKS, Carsten, 59555 Lippstadt (DE)

(56) Entgegenhaltungen:
- WO-A2-2008/037388
- DE-A1- 19 602 622
- DE-A1-102007 000 600
- DE-A1-102008 012 327
- GB-A- 1 352 999

## Beschreibung

Verfahren und Vorrichtung zum Steuern von vertikalen Hell-Dunkel-Grenzen bei Scheinwerfern innerhalb eines Schwenkbereichs eines Kraftfahrzeugs.

Aus der Offenlegungsschrift mit der Veröffentlichungsnummer DE 21 44 197 ist ein Kraftfahrzeugscheinwerfer bekannt, bei dem die vertikalen Hell-Dunkel-Grenzen eingestellt werden können. Die vertikalen Hell-Dunkel-Grenzen werden durch den Scheinwerfer automatisch so eingestellt, dass eine Blendung des vorausfahrenden Verkehrs oder des entgegenkommenden Verkehrs möglichst vermieden wird. Dazu können die vertikalen Hell-Dunkel-Grenzen des von dem Scheinwerfer abgestrahlten Lichts nach rechts oder links verschoben werden. Die Verschiebung der Hell-Dunkel-Grenzen erfolgt so, dass der linke Scheinwerfer des Fahrzeugs links an dem Objekt vorbei leuchtet, dessen Fahrer möglicherweise geblendet werden könnte. Entsprechend wird der rechte Scheinwerfer so eingestellt, dass das von diesem Scheinwerfer abgestrahlte Licht rechts von dem Fahrzeug liegt, das entblendet wird. Dadurch entsteht vor dem Kraftfahrzeug ein unbeleuchteter Bereich, der Tunnel genannt wird, in dem sich das entblendete Fahrzeug befindet. Der Tunnel wird durch die linke bzw. rechte Hell-Dunkel-Grenze begrenzt.

Um ein automatisches Einstellen der vertikalen Hell-Dunkel-Grenzen der Scheinwerfer erreichen zu können, weist der Scheinwerfer ein Sensorsystem auf. Das Sensorsystem erkennt Lichtquellen des vorausfahrenden oder entgegenkommenden Fahrzeugs, d. h. entweder die Frontscheinwerfer oder aber die Rückleuchten des Fahrzeugs.

Weiterentwicklungen zu dem in der genannten Offenlegungsschrift DE 21 44 197 offenbarten Scheinwerfer sind Steuervorrichtungen für Scheinwerfer, die einen ersten Eingang für ein erstes Signal aufweisen. Dieses erste Signal gibt bezogen auf die Längsachse des Fahrzeugs eine Richtung an, in welcher dem Kraftfahrzeug eine Lichtquelle eines zweiten Fahrzeugs entgegenkommt oder sich von dem ersten Fahrzeug in gleicher Fahrtrichtung fortbewegt. Die Steuervorrichtung kann ein Stellsignal sowohl für den rechten Scheinwerfer als auch für den linken Scheinwerfer erzeugen. Die Stellsignale dienen zum Einstellen der vertikalen Hell-Dunkel-Grenzen in Abhängigkeit von dem ersten Signal. Mit der Steuervorrichtung wird die rechte vertikale Hell-Dunkel-Grenze des Tunnels zum Entblenden eines entgegenkommenden oder vorausfahrenden zweiten Fahrzeugs geschwenkt. Ebenso wird die linke vertikale Hell-Dunkel-Grenze des Tunnels zum Entblenden eines entgegenkommenden oder vorausfahrenden zweiten Fahrzeugs geschwenkt.

Gegenstand der Weiterentwicklungen ist auch, dass nicht ein erstes Signal berücksichtigt wird, das die Richtung des entgegenkommenden oder vorrausfahrenden Fahrzeugs anzeigt sondern zwei erste Signale, wobei das eine erste Signal die Richtung einer linken Kante einer äußerst linken Lichtquelle und das andere erste Signal die Richtung einer rechten Kante einer äußerst rechten Lichtquelle des entgegenkommenden oder vorrausfahrenden Fahrzeugs anzeigt. Diese Richtungen werden auch als Objektwinkel bezeichnet.

Als Grundlage für die Ermittlung der vertikalen Hell-Dunkel-Grenzen dienen die über den ersten Eingang eingelesenen Objektwinkel, unter welchen das vorausfahrende oder entgegenkommende zweite Fahrzeug ermittelt wird. Es sei darauf hingewiesen, dass der Objektwinkel sich in der Regel nicht auf die Kontur des zweiten Fahrzeugs im Ganzen, sondern nur auf die Position der jeweils äußersten Lichtquelle des zweiten Fahrzeugs bezieht, die von einem Sensorsystem erkannt werden. Dieses ist bei entgegenkommenden Fahrzeugen der rechte oder linke Frontscheinwerfer und bei vorausfahrenden Fahrzeugen das rechte oder linke Rücklicht.

Die bekannten Steuervorrichtungen sind in der Regel so ausgestaltet, dass die rechte Hell-Dunkel-Grenze und die linke Hell-Dunkel-Grenze nur innerhalb eines vorgegebenen Bereichs eingestellt werden können. Diese Bereiche sind beispielsweise so gewählt, dass die rechte Hell-Dunkel-Grenze nicht links von der Fahrzeuglängsrichtung und die linke Hell-Dunkel-Grenze nicht rechts von der Fahrzeuglängsrichtung liegen kann. Dieses hat den Zweck, dass Verkehrsteilnehmer außerhalb der Fahrbahnen, z.B. Arbeitsmaschinen auf angrenzenden Feldern, Fahrzeuge auf Parkplätzen oder dergleichen, nicht geblendet werden.

Durch die Begrenzung des Schwenkbereichs der vertikalen Hell-Dunkel-Grenzen wird allerdings verhindert, dass bei einer Kurvenfahrt der Tunnel nur so schmal gemacht wird, wie es notwendig ist, um den vorausfahrenden oder entgegenkommenden Verkehr zu entblenden. Der Tunnel ist vielmehr größer als unbedingt notwendig, was dazu führt, dass die Fahrbahn bei einer Kurvenfahrt nicht immer ausgeleuchtet ist.

Der Erfindung liegt daher die Aufgabe zugrunde eine Steuervorrichtung und ein Verfahren zum Steuern der vertikalen Hell-Dunkel-Grenzen bei Scheinwerfern so zu verbessern, dass bei aktivierter Steuerung der vertikalen Hell-Dunkel-Grenzen in Kurvenabschnitten und in Geradeausabschnitten stets eine optimale Ausleuchtung des Vorfeldes des Kraftfahrzeuges erreicht wird und zugleich Fahrzeuge oder Objekte neben dem Straßenverlauf entblendet werden. Die Steuervorrichtung bzw. das Verfahren soll insbesondere so verbessert werden, dass auch bei Kurvenfahrten eine optimale Ausleuchtung der Fahrbahn gewährleistet ist und der unbeleuchtete Tunnel so eng wie notwendig ist.

Diese Aufgabe wird erfindungsgemäß durch eine Steuervorrichtung nach Anspruch 1 oder 2 und ein Verfahren nach Anspruch 3 oder 4 gelöst.

Gemäß Anspruch 1 bzw 2 wird die Aufgabe dadurch gelöst, dass eine sichere Entblendung von Objekten außerhalb des Straßenverlaufs dadurch gewährleistet wird, dass die Hell-Dunkel-Grenzen an den Richtungen ausgerichtet werden, in denen die ersten Signale die rechte Kante der äußerst rechten Lichtquelle und die linke der äußerst linken Lichtquelle anzeigen. Eine ausreichende Ausleuchtung des Vorfeldes des Kraftfahrzeuges wird dadurch erreicht, dass die Steuervorrichtung über einen dritten Eingang ein drittes Signal einliest, welches den vor dem Kraftfahrzeug liegenden Straßenverlauf anzeigt. Ferner ist die Steuervorrichtung geeignet und eingerichtet, die rechte Hell-Dunkel-Grenze oder die linke Hell-Dunkel-Grenze in Abhängigkeit von den ersten Signalen auszurichten oder die Steuerung dieser Hell-Dunkel-Grenze zu deaktivieren und die andere Hell-Dunkel-Grenze in Abhängigkeit von den ersten Signalen vorzugeben oder anstelle zur Abhängigkeit von den ersten Signalen in Abhängigkeit von dem dritten Signal vorzugeben.

An den dritten Eingang der erfindungsgemäßen Steuervorrichtung kann ein Kamerasystem angeschlossen oder anschließbar sein. Ebenso ist es möglich, dass an den dritten Eingang ein satellitengestütztes, elektronisches Kartensystem angeschlossen ist oder anschließbar ist.

Bei einem erfindungsgemäßen Verfahren nach Anspruch 3 bzw 4 zum Steuern von vertikalen Hell-Dunkel-Grenzen bei Scheinwerfern eines Kraftfahrzeugs, liest erfindungsgemäß die Steuervorrichtung über einen ersten Eingang erste Signale ein, welche die auf eine Längsachse des Kraftfahrzeugs bezogenen Richtungen angeben, in welchen vor dem Kraftfahrzeug eine linke Kante einer äußerst linken Lichtquelle und eine rechte Kante einer äußerst rechten Lichtquelle eines Objektes, insbesondere eines entgegenkommenden Fahrzeugs oder sich vor dem Kraftfahrzeug in gleicher Fahrtrichtung fortbewegenden Fahrzeugs liegen. Die Steuervorrichtung erzeugt in Abhängigkeit von den ersten Signalen ein Stellsignal für den rechten Scheinwerfer und ein Stellsignal für den linken Scheinwerfer des Kraftfahrzeugs zum Einstellen der vertikalen Hell-Dunkel-Grenzen. Mit dem Stellsignal werden eine rechte vertikale Hell-Dunkel-Grenze und eine linke vertikale Hell-Dunkel-Grenze zum Entblenden des Objektes eingestellt.

Das Besondere ist nun, dass die Steuervorrichtung über einen dritten Eingang ein drittes Signal einliest, welches den vor dem Kraftfahrzeug liegenden Straßenverlauf anzeigt. Die Steuervorrichtung richtet die Hell-Dunkel-Grenze des Scheinwerfers, auf dessen Seite sich das zu entblendende Objekt bezüglich der Längsachse des Kraftfahrzeugs befindet, entweder an dem Objekt aus oder die Steuerung deaktiviert die Hell-Dunkel-Grenze dieses Scheinwerfers. Ferner richtet die Steuervorrichtung die Hell-Dunkel-Grenze des Scheinwerfers, auf der dem Objekt bezüglich der Längsachse des Kraftfahrzeugs abgewandten Seite, entweder an dem Objekt oder am vor dem Kraftfahrzeug liegenden Straßenverlauf aus.

Die Steuervorrichtung prüft nach dem erfindungsgemäßen Verfahren, ob sich das Objekt im vor dem Kraftfahrzeug liegenden Straßenverlauf befindet. Falls das Objekt sich nicht im vor dem Kraftfahrzeug liegenden Straßenverlauf befindet, prüft die Steuervorrichtung nach Anspruch 4 weiter, ob die Helligkeit in einem Vorfeld des Kraftfahrzeuges ausreichend ist, wenn die Hell-Dunkel-Grenze des Scheinwerfers, auf dessen Seite sich das Objekt bezüglich der Längsachse des Kraftfahrzeugs befindet, an dem Objekt ausgerichtet wird und die Hell-Dunkel-Grenze des anderen Scheinwerfers an dem Straßenverlauf ausgerichtet wird. Liegt dann im Vorfeld eine ausreichende Helligkeit vor, befindet sich das zu entblendende Objekt in einem Bereich in der Nähe des vor dem Kraftfahrzeug liegenden Straßenverlauf. Eine Entblendung eines solchen Objektes in diesem Bereich kann erreicht werden, ohne dass das Vorfeld des Kraftfahrzeugs bei Ausrichtung der Hell-Dunkel-Grenze des an dem Objekt zugewandten Scheinwerfers zu gering beleuchtet ist. Nach einem erfindungsgemäßen Verfahren kann die Steuervorrichtung die Hell-Dunkel-Grenze beim auf der Seite des Objektes liegenden Scheinwerfers (weiterhin) in die Richtung der äußeren Kante einer Lichtquelle des Objektes auf der der Längsachse des Kraftfahrzeugs abgewandeten Seite gerichtet werden. Die Hell-Dunkel-Grenze des anderen Scheinwerfers wird dann (weiterhin) in die Richtung des Straßenverlaufs gelegt.

Bei nicht ausreichender Helligkeit im Vorfeld des Kraftfahrzeuges ist der die Hell-Dunkel-Grenze des dem Objekt zugewandten Scheinwerfers so weit nach außen geschwenkt, dass das Vorfeld des Kraftfahrzeuges zu dunkel ist. Die Steuervorrichtung kann nach einem erfindungsgemäßen Verfahren die Steuerung der Hell-Dunkel-Grenze des Scheinwerfers der Seite des Fahrzeuges deaktivieren, auf der sich das Objekt bezüglich der Längsachse des Fahrzeuges befindet. Der Scheinwerfer, dessen Steuerung der vertikalen Hell-Dunkel-Grenze deaktiviert ist, wird auf eine alternative Lichtverteilung eingestellt, beispielsweise Abblendlicht. Zu dem Scheinwerfer, dessen Steuerung der vertikalen Hell-Dunkel-Grenze deaktiviert ist, kann nach einem erfindungsgemäßen Verfahren eine Steuerung des Kurvenlichts aktiviert werden oder bleiben. Dagegen wird die Hell-Dunkel-Grenze des Scheinwerfers auf der dem Objekt entgegengesetzten Seite des Kraftfahrzeugs vorzugsweise an dem Straßenverlauf ausgerichtet.

Anstelle der Prüfung der Helligkeit im Vorfeld des Kraftfahrzeuges bei an dem Objekt ausgerichteten vertikalen Hell-Dunkel-Grenzen kann nach Anspruch 3 auch eine Prüfung gemäß einem erfindungsgemäßen Verfahren treten, bei dem die Entfernung des zu entblendenden Objektes vom vor dem Kraftfahrzeug liegenden Straßenverlauf festgestellt wird und mit einem zuvor festgelegten Wert verglichen wird. Ist die Entfernung des Objektes kleiner als der zuvor festgelegte Wert, kann davon ausgegangen werden, dass bei aktiver Steuerung und Ausrichtung der vertikalen Hell-Dunkel-Grenzen eine ausreichende Helligkeit im Vorfeld des Kraftfahrzeuges vorliegt. Ist die Entfernung größer als der zuvor festgelegte Wert, kann man davon ausgehen, dass eine Ausrichtung der Hell-Dunkel-Grenzen an dem Objekt zu einer zu geringen Helligkeit im Vorfeld des Kraftfahrzeugs führt.

Falls das Objekt sich im vor dem Kraftfahrzeug liegenden Straßenverlauf befindet, kann nach einem erfindungsgemäßen Verfahren gemäß Anspruch 5 die Steuervorrichtung die vertikale Hell-Dunkel-Grenze des rechten Scheinwerfers basierend auf der Richtung der rechten Kante einer äußerst rechten Lichtquelle des Objektes und die vertikale Hell-Dunkel-Grenze des linken Scheinwerfers basierend auf der Richtung der linken Kante einer äußerst linken Lichtquelle des Objektes liegen. Eine Begrenzung des Schwenkbereichs für die rechte oder die linke Hell-Dunkel-Grenze erfolgt dabei nicht. Da sich das zu entblendende Objekt im vor dem Kraftfahrzeug liegenden Straßenverlauf befindet, ist sichergestellt, dass durch das Einstellen der Hell-Dunkel-Grenzen einerseits das Objekt entblendet und der vor dem Kraftfahrzeug liegende Straßenverlauf hinreichend beleuchtet ist.

Anhand der beigefügten Zeichnungen wird die Erfindung nachfolgend näher erläutert. Dabei zeigt:

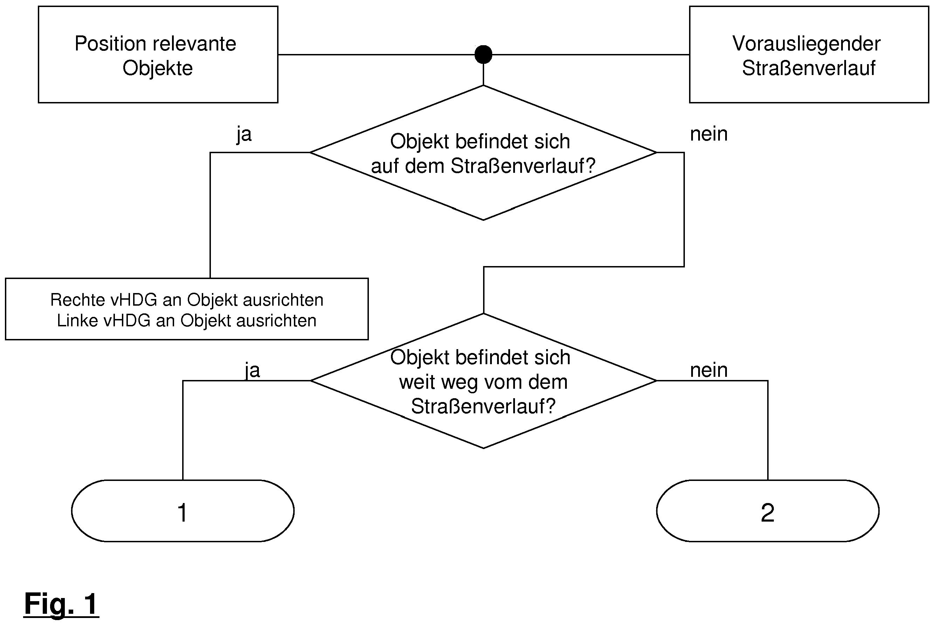

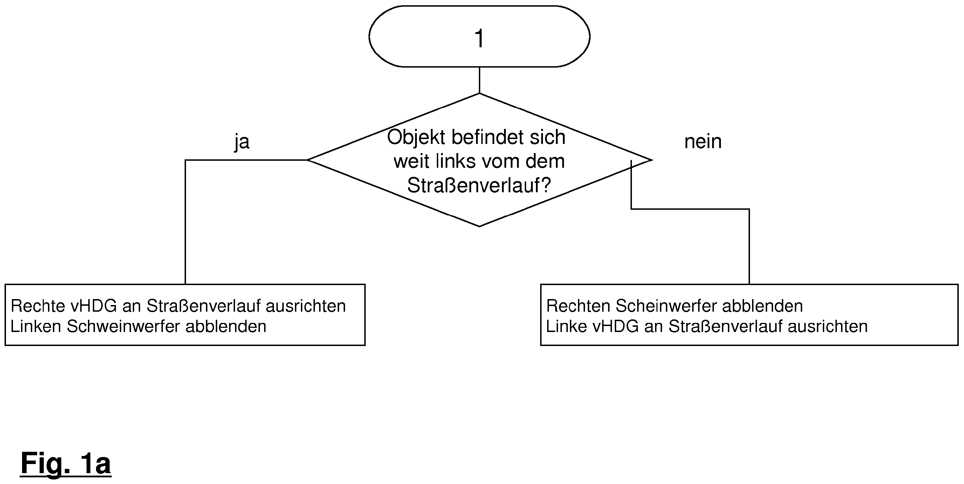

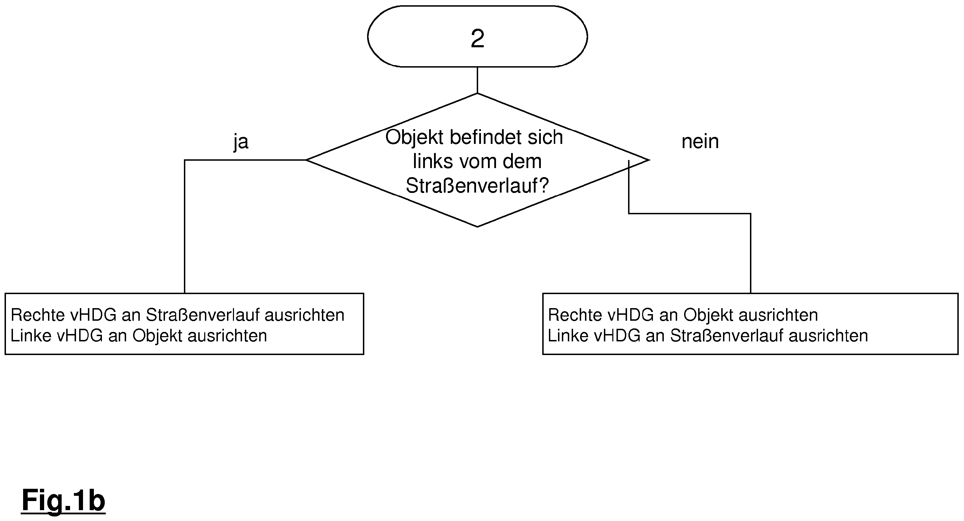

- Fig. 1: ein Flussdiagramm zur Darstellung eines erfindungsgemäßen Verfahrens
- bis 1: b ohne Festlegung von Schwenkbereichen der vertikalen Hell-Dunkel-Grenzen,

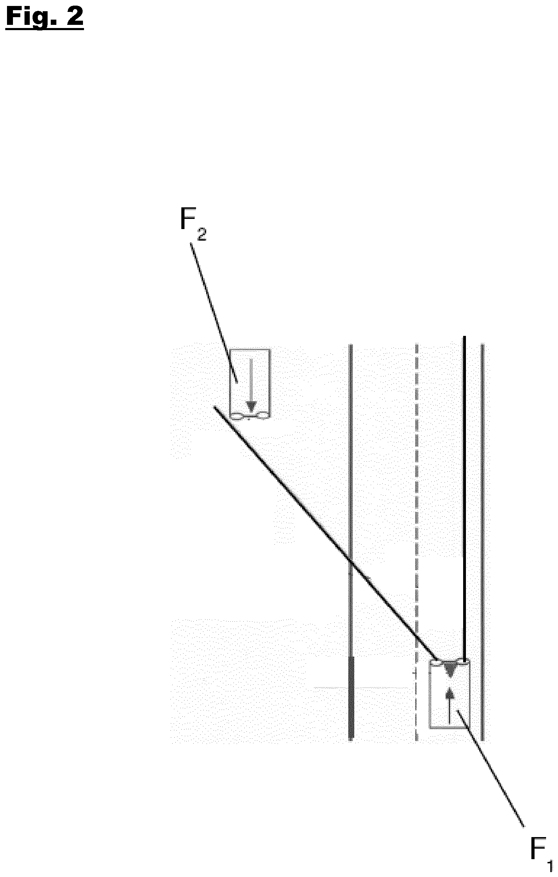

- Fig. 2: eine Darstellung einer Fahrsituation in der Draufsicht, mit einer an dem vor einem Kraftfahrzeug liegenden Straßenverlauf ausgerichteter vertikalen Hell-Dunkel-Grenze des rechten Scheinwerfers und einer an dem Objekt ausgerichteter vertikalen Hell-Dunkel-Grenze des linken Scheinwerfers bei einer Geradeausfahrt des Fahrzeugs,

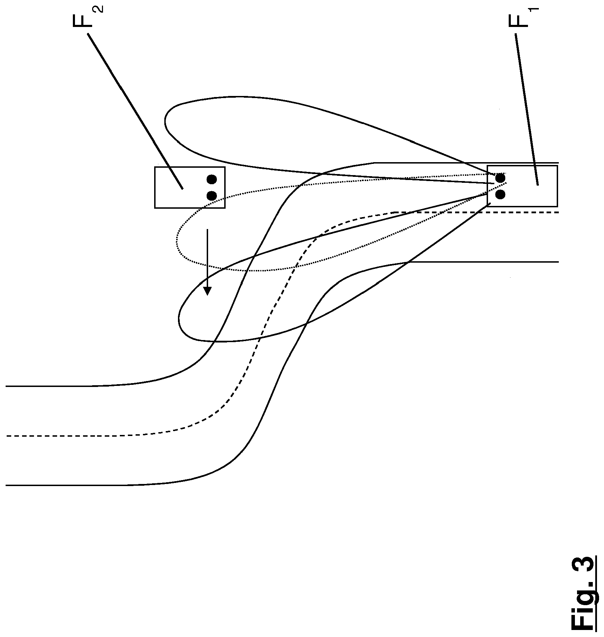

- Fig. 3: eine Darstellung einer Fahrsituation in der Draufsicht, mit einer an dem vor einem Kraftfahrzeug liegenden Straßenverlauf ausgerichteter rechten vertikalen Hell-Dunkel-Grenze des linken Scheinwerfers und einer an dem Objekt ausgerichteter linken vertikalen Hell-Dunkel-Grenze des rechten Scheinwerfers bei einer Kurvenfahrt des Fahrzeugs,

In den Figuren 1 bis 1b ist das erfindungsgemäße Verfahren näher dargestellt, wobei aber an die Stelle der Prüfung der Helligkeit im Vorfeld des Kraftfahrzeuges bei einem außerhalb des Straßenverlaufs befindlichen Objektes die Prüfung der Entfernung des Objektes zum Straßenverlauf treten kann.

Die Figuren 2 und 3 zeigen das Ergebnis des erfindungsgemäßen Verfahrens für den Fall eines außerhalb des Straßenverlaufs F₂ befindlichen Objektes, das sich in geringer Entfernung zum Straßenverlauf befindet. Das Ergebnis in beiden Fahrsituationen ist, dass die vertikale Hell-Dunkel-Grenze des Scheinwerfers, der auf der dem Objekt F₂ zugewandten Seite der Längsachse I des Kraftfahrzeugs F₁ liegt an dem Objekt F₂ ausgerichtet ist. Das ist in der in Figur 2 dargestellten Fahrsituation die vertikale Hell-Dunkel-Grenze des linken Scheinwerfers, der an der an der linken Kante der äußerst linken Lichtquelle des Objektes F₂ ausgerichtet ist. In der in der Figur 3 dargestellten Fahrsituation ist das die vertikale Hell-Dunkel-Grenze des rechten Scheinwerfers, die an der rechten Kante der äußerst rechten Lichtquelle des Objektes F₂ ausgerichtet ist.

Dagegen sind in beiden Fahrsituationen die vertikalen Hell-Dunkel-Grenzen des bezüglich der Längsachse des Kraftfahrzeugs F₁ vom Objekt abgewandten Scheinwerfers auf den weiteren Straßenverlauf ausgerichtet. In Figur 3 ist dargestellt, wie sich die vertikale Hell-Dunkel-Grenze des linken Scheinwerfers dadurch vom Objekt F₂ weg in den Straßenverlauf hin verschiebt.

### Bezugszeichenliste

- F₁: erstes Kraftfahrzeug
- F₂: entgegenkommendes Fahrzeug
- I: Längsachse des ersten Kraftfahrzeugs

## Patentansprüche

1. Vorrichtung zum Steuern von vertikalen Hell-Dunkel-Grenzen bei Scheinwerfern eines Kraftfahrzeugs, wobei
- die Steuervorrichtung (10) einen ersten Eingang (12) für erste Signale aufweist, welche die auf eine Längsachse (I) des Kraftfahrzeugs (F₁) bezogenen Richtungen angeben, in welchen vor dem Kraftfahrzeug (F₁) eine linke Kante einer äußerst linken Lichtquelle und eine rechte Kante einer äußerst rechten Lichtquelle eines Objektes, insbesondere eines Fahrzeugs (F₂) entgegenkommen oder sich vor dem Kraftfahrzeug (F₁) in gleicher Fahrtrichtung fortbewegen,
- wobei die Steuervorrichtung zum Erzeugen eines Stellsignals für den rechten Scheinwerfer (50) und eines Stellsignals für den linken Scheinwerfer (40) des Fahrzeugs (F₁) zum Einstellen der vertikalen Hell-Dunkel-Grenzen in Abhängigkeit von den ersten Signalen geeignet und eingerichtet ist,
- mit welchen eine rechte vertikale Hell-Dunkel-Grenze und eine linke vertikale Hell-Dunkel-Grenze zum Entblenden des Objektes eingestellt werden kann,
**dadurch gekennzeichnet,**
- **dass** die Steuervorrichtung (10) einen dritten Eingang (14) für ein drittes Signal aufweist, welches den vor dem Kraftfahrzeug liegenden Straßenverlauf anzeigt, und
- **dass** die Steuervorrichtung (10) geeignet und eingerichtet ist,
- festzustellen, ob das Objekt sich auf dem Straßenverlauf befindet oder nicht,
- **dass**
- entweder die Steuervorrichtung (10) geeignet und eingerichtet ist, bei einem Objekt, das sich nicht auf dem Straßenverlauf befindet, festzustellen, ob sich das Objekt weit weg vom Straßenverlauf befindet oder nicht, d.h. ob die Entfernung des Objekts vom vor dem Kraftfahrzeug liegenden Straßenverlauf einen zuvor festgelegten Wert überschreitet oder nicht,
- und **dass** die Steuervorrichtung (10) geeignet und eingerichtet ist,
- bei einem Objekt, das zum einen sich nicht auf dem Straßenverlauf befindet und zum anderen sich nicht weit weg vom Straßenverlauf befindet, die Hell-Dunkel-Grenze des Scheinwerfers, auf dessen Seite sich das Objekt bezüglich der Längsachse des Kraftfahrzeugs befindet, in Abhängigkeit von den ersten Signalen auszurichten und die andere Hell-Dunkel-Grenze in Abhängigkeit von dem dritten Signal vorzugeben, und
- bei einem Objekt, das zum einen sich nicht auf dem Straßenverlauf befindet und zum anderen sich weit weg vom Straßenverlauf befindet, die Steuerung der Hell-Dunkel-Grenze des Scheinwerfers, auf dessen Seite sich das Objekt bezüglich der Längsachse des Kraftfahrzeugs befindet, zu deaktivieren, d.h. den entsprechenden Scheinwerfer (40, 50) auf eine alternative Lichtverteilung einzustellen und die andere Hell-Dunkel-Grenze in Abhängigkeit von dem dritten Signal vorzugeben.

2. Vorrichtung zum Steuern von vertikalen Hell-Dunkel-Grenzen bei Scheinwerfern eines Kraftfahrzeugs, wobei
- die Steuervorrichtung (10) einen ersten Eingang (12) für erste Signale aufweist, welche die auf eine Längsachse (I) des Kraftfahrzeugs (F₁) bezogenen Richtungen angeben, in welchen vor dem Kraftfahrzeug (F₁) eine linke Kante einer äußerst linken Lichtquelle und eine rechte Kante einer äußerst rechten Lichtquelle eines Objektes, insbesondere eines Fahrzeugs (F₂) entgegenkommen oder sich vor dem Kraftfahrzeug (F₁) in gleicher Fahrtrichtung fortbewegen,
- wobei die Steuervorrichtung zum Erzeugen eines Stellsignals für den rechten Scheinwerfer (50) und eines Stellsignals für den linken Scheinwerfer (40) des Fahrzeugs (F₁) zum Einstellen der vertikalen Hell-Dunkel-Grenzen in Abhängigkeit von den ersten Signalen geeignet und eingerichtet ist,
- mit welchen eine rechte vertikale Hell-Dunkel-Grenze und eine linke vertikale Hell-Dunkel-Grenze zum Entblenden des Objektes eingestellt werden kann,
**dadurch gekennzeichnet,**
- **dass** die Steuervorrichtung (10) einen dritten Eingang (14) für ein drittes Signal aufweist, welches den vor dem Kraftfahrzeug liegenden Straßenverlauf anzeigt, und
- **dass** die Steuervorrichtung (10) geeignet und eingerichtet ist,
- festzustellen, ob das Objekt sich auf dem Straßenverlauf befindet oder nicht,
- **dass**
- die Steuervorrichtung (10) geeignet und eingerichtet ist, bei einem Objekt, das sich nicht auf dem Straßenverlauf befindet, festzustellen, ob die Helligkeit in einem Vorfeld des Kraftfahrzeuges ausreichend ist oder nicht, wenn die Hell-Dunkel-Grenze des Scheinwerfers, auf dessen Seite sich das Objekt bezüglich der Längsachse des Kraftfahrzeugs befindet, an dem Objekt ausgerichtet wird und die Hell-Dunkel-Grenze des anderen Scheinwerfers an dem Straßenverlauf ausgerichtet wird,
- und **dass** die Steuervorrichtung (10) geeignet und eingerichtet ist,
- bei einem Objekt, das zum einen sich nicht auf dem Straßenverlauf befindet und zum anderen die Helligkeit im Vorfeld des Fahrzeugs ausreichend ist, die Hell-Dunkel-Grenze des Scheinwerfers, auf dessen Seite sich das Objekt bezüglich der Längsachse des Kraftfahrzeugs befindet in Abhängigkeit von den ersten Signalen auszurichten und die andere Hell-Dunkel-Grenze in Abhängigkeit von dem dritten Signal vorzugeben, und
- bei einem Objekt, das zum einen sich nicht auf dem Straßenverlauf befindet und zum anderen die Helligkeit im Vorfeld des Fahrzeugs nicht ausreichend ist, die Steuerung der Hell-Dunkel-Grenze des Scheinwerfers, auf dessen Seite sich das Objekt bezüglich der Längsachse des Kraftfahrzeugs befindet, zu deaktivieren, d.h. den entsprechenden Scheinwerfer (40, 50) auf eine alternative Lichtverteilung einzustellen und die andere Hell-Dunkel-Grenze in Abhängigkeit von dem dritten Signal vorzugeben.

3. Verfahren zum Steuern von vertikalen Hell-Dunkel-Grenzen bei Scheinwerfern eines Kraftfahrzeugs, wobei
- die Steuervorrichtung (10) über einen ersten Eingang (12) erste Signale einliest, welche die auf eine Längsachse (I) des Kraftfahrzeugs (F₁) bezogenen Richtungen angeben, in welchen vor dem Kraftfahrzeug (F₁) eine linke Kante einer äußerst linken Lichtquelle und eine rechte Kante einer äußerst rechten Lichtquelle eines Objektes, insbesondere eines Fahrzeugs (F₂) entgegenkommen oder sich vor dem Kraftfahrzeug (F₁) in gleicher Fahrtrichtung fortbewegen,
- die Steuervorrichtung (10) in Abhängigkeit von den ersten Signalen ein Stellsignal für den rechten Scheinwerfer (50) und ein Stellsignal für den linken Scheinwerfer (40) des Kraftfahrzeugs (F₁) zum Einstellen der vertikalen Hell-Dunkel-Grenzen erzeugt,
- mit welchem eine rechte vertikale Hell-Dunkel-Grenze und eine linke vertikale Hell-Dunkel-Grenze zum Entblenden des Objektes eingestellt werden kann,
**dadurch gekennzeichnet,**
- **dass** die Steuervorrichtung über einen dritten Eingang (14) ein drittes Signal einliest, welches den vor dem Kraftfahrzeug liegenden Straßenverlauf anzeigt,
- **dass** die Steuervorrichtung feststellt, ob sich das Objekt auf dem Straßenverlauf befindet oder nicht und
- **dass** die Steuervorrichtung, wenn sich das Objekt nicht auf dem Straßenverlauf befindet, feststellt, ob das Objekt weit weg vom Straßenverlauf ist oder nicht, d.h. ob die Entfernung des Objekts vom vor dem Kraftfahrzeug liegenden Straßenverlauf einen zuvor festgelegten Wert überschreitet oder nicht, und
- **dass** die Steuervorrichtung (10) in dem Fall, dass zum einen sich das Objekt nicht auf dem Straßenverlauf befindet und zum anderen sich entweder sich das Objekt nicht weit weg vom Straßenverlauf befindet, die Steuerung der Hell-Dunkel-Grenze des Scheinwerfers, auf dessen Seite sich das zu entblendende Objekt bezüglich der Längsachse des Kraftfahrzeugs befindet, an dem Objekt ausrichtet und die Hell-Dunkel-Grenze des Scheinwerfers, auf der dem Objekt bezüglich der Längsachse des Kraftfahrzeugs abgewandten Seite, am vor dem Kraftfahrzeug liegenden Straßenverlauf ausrichtet
- **dass** die Steuervorrichtung (10) in dem Fall, dass zum einen sich das Objekt nicht auf dem Straßenverlauf befindet und zum anderen sich entweder weit weg vom Straßenverlauf befindet, die Steuerung der Hell-Dunkel-Grenze des Scheinwerfers, auf dessen Seite sich das zu entblendende Objekt bezüglich der Längsachse des Kraftfahrzeugs befindet, deaktiviert, d.h. den entsprechenden Scheinwerfer (40, 50) auf eine alternative Lichtverteilung einstellt und die Hell-Dunkel-Grenze des Scheinwerfers, auf der dem Objekt bezüglich der Längsachse des Kraftfahrzeugs abgewandten Seite am vor dem Kraftfahrzeug liegenden Straßenverlauf ausrichtet.

4. Verfahren zum Steuern von vertikalen Hell-Dunkel-Grenzen bei Scheinwerfern eines Kraftfahrzeugs, wobei
- die Steuervorrichtung (10) über einen ersten Eingang (12) erste Signale einliest, welche die auf eine Längsachse (I) des Kraftfahrzeugs (F₁) bezogenen Richtungen angeben, in welchen vor dem Kraftfahrzeug (F₁) eine linke Kante einer äußerst linken Lichtquelle und eine rechte Kante einer äußerst rechten Lichtquelle eines Objektes, insbesondere eines Fahrzeugs (F₂) entgegenkommen oder sich vor dem Kraftfahrzeug (F₁) in gleicher Fahrtrichtung fortbewegen,
- die Steuervorrichtung (10) in Abhängigkeit von den ersten Signalen ein Stellsignal für den rechten Scheinwerfer (50) und ein Stellsignal für den linken Scheinwerfer (40) des Kraftfahrzeugs (F₁) zum Einstellen der vertikalen Hell-Dunkel-Grenzen erzeugt,
- mit welchem eine rechte vertikale Hell-Dunkel-Grenze und eine linke vertikale Hell-Dunkel-Grenze zum Entblenden des Objektes eingestellt werden kann,
**dadurch gekennzeichnet,**
- **dass** die Steuervorrichtung über einen dritten Eingang (14) ein drittes Signal einliest, welches den vor dem Kraftfahrzeug liegenden Straßenverlauf anzeigt,
- **dass** die Steuervorrichtung feststellt, ob sich das Objekt auf dem Straßenverlauf befindet oder nicht und
- **dass** die Steuervorrichtung, wenn sich das Objekt nicht auf dem Straßenverlauf befindet, feststellt, ob die Helligkeit im Vorfeld des Fahrzeugs ausreichend ist oder nicht, wenn die Hell-Dunkel-Grenze des Scheinwerfers, auf dessen Seite sich das Objekt bezüglich der Längsachse des Kraftfahrzeugs befindet, an dem Objekt ausgerichtet wird und die Hell-Dunkel-Grenze des anderen Scheinwerfers an dem Straßenverlauf ausgerichtet wird und
- **dass** die Steuervorrichtung (10) in dem Fall, dass zum einen sich das Objekt nicht auf dem Straßenverlauf befindet und zum anderen die Helligkeit ausreichend ist, die Steuerung der Hell-Dunkel-Grenze des Scheinwerfers, auf dessen Seite sich das zu entblendende Objekt bezüglich der Längsachse des Kraftfahrzeugs befindet, an dem Objekt ausrichtet und die Hell-Dunkel-Grenze des Scheinwerfers, auf der dem Objekt bezüglich der Längsachse des Kraftfahrzeugs abgewandten Seite, am vor dem Kraftfahrzeug liegenden Straßenverlauf ausrichtet
- **dass** die Steuervorrichtung (10) in dem Fall, dass zum einen sich das Objekt nicht auf dem Straßenverlauf befindet und zum anderen die Helligkeit nicht ausreichend ist, die Steuerung der Hell-Dunkel-Grenze des Scheinwerfers, auf dessen Seite sich das zu entblendende Objekt bezüglich der Längsachse des Kraftfahrzeugs befindet, deaktiviert, d.h. den entsprechenden Scheinwerfer (40, 50) auf eine alternative Lichtverteilung einstellt und die Hell-Dunkel-Grenze des Scheinwerfers, auf der dem Objekt bezüglich der Längsachse des Kraftfahrzeugs abgewandten Seite am vor dem Kraftfahrzeug liegenden Straßenverlauf ausrichtet.

5. Verfahren nach Anspruch 3 oder 4, **dadurch gekennzeichnet, dass**, falls das Objekt sich im vor dem Kraftfahrzeug liegenden Straßenverlauf befindet, die Steuervorrichtung die Hell-Dunkel-Grenzen beider Scheinwerfer am Objekt ausrichtet, d.h. die vertikale Hell-Dunkel-Grenze des rechten Scheinwerfers basierend auf der Richtung der rechten Kante einer äußerst rechten Lichtquelle und die vertikale Hell-Dunkel-Grenze des linken Scheinwerfers basierend auf der Richtung der linken Kante einer äußerst linken Lichtquelle des Objektes legt.

## Claims

1. Equipment for controlling vertical cut-off lines for vehicle headlamps, where
- the actuating device (10) features a first input (12) for first signals, which specify the directions in relation to the longitudinal axis (I) of the vehicle (F₁), in which, in front of the vehicle (F₁), a left edge of an outermost left light source and right edge of an outermost right light source of an object in particular is moving toward a vehicle (F₂) or moving forward in front of the vehicle (F₁) in the direction of the vehicle,
- where the control device for generating a control signal for the right vehicle headlamp (50) and a control signal for the left headlamp (40) of the vehicle (F₁) is suitable and set up to adjust the vertical cut-off line based on the first signals,
- that, in turn, can be used to adjust a right vertical cut-off line and a left vertical cut-off line to suppress the glare of the object,
wherein
- the control device (10) features a third input (14) for a third signal, which displays the road in front of the vehicle, and
- the control device (10) is suitable and set up
- to detect if the object is on the road,
- wherein
- the control device (10) is suitable and set up to detect if an object that is not on the road is far away from the road, i.e. if the distance of the object from the road in front of the vehicle exceeds a previously defined value,
- and the control device (10) is suitable and set up,
- for an object that is both not on the road and not far away from the road, to align the cut-off line of the headlamp where the object is located in relation to the longitudinal axis of the vehicle based on the first signals and to specify the other cut-off line based on the third signal, and,
- for an object that is both not on the road and is far away from the road, to deactivate the control system of the cut-off line of the headlamp where the object is located in relation to the longitudinal axis of the vehicle, i.e. to set the corresponding headlamp (40, 50) to an alternative light distribution and specify the other cut-off line based on the third signal.

2. Equipment for controlling vertical cut-off lines for vehicle headlamps, where
- the actuating device (10) features a first input (12) for first signals, which specify the directions in relation to the longitudinal axis (I) of the vehicle (F₁), in which, in front of the vehicle (F₁), a left edge of an outermost left light source and a right edge of an outermost right light source of an object,, is moving toward a vehicle (F₂) or moving forward in front of the vehicle (F₁) in the same direction as the vehicle,
- where the control device for generating a control signal for the right vehicle headlamp (50) and a control signal for the left headlamp (40) of the vehicle (F₁) is suitable and set up to adjust the vertical cut-off line based on the first signals,
- that, in turn, can be used to adjust a right vertical cut-off line and a left vertical cut-off line to suppress the glare of the object, wherein
- the control device (10) features a third input (14) for a third signal, which displays the road in front of the vehicle, and
- the control device (10) is suitable and set up
- to detect if the object is on the road,
- wherein
- the control device (10) is suitable and set up, for an object that is not on the road, to detect if the brightness in front of the vehicle is sufficient if the cut-off line of the headlamp where the object is located in relation to the longitudinal axis of the vehicle is aligned with the object and the cut-off line of the other headlamp is aligned with the road,
- and the control device (10) is suitable and set up,
- for an object that is not on the road and for which the brightness in front of the vehicle is sufficient, to align the cut-off line of the headlamp where the object is located in relation to the longitudinal axis of the vehicle based on the first signals and to specify the other cut-off line based on the third signal, and,
- for an object that is not on the road and for which the brightness in front of the vehicle is not sufficient, to deactivate the control system of the cut-off line of the headlamp where the object is located in relation to the longitudinal axis of the vehicle, i.e. to set the corresponding headlamp (40, 50) to an alternative light distribution and specify the other cut-off line based on the third signal.

3. Method for controlling vertical cut-off lines for vehicle headlamps, where
- the actuating device (10) uses a first input (12) to read in first signals, which specify the directions in relation to the longitudinal axis (I) of the vehicle (F₁), in which a left edge of an outermost left light source and right edge of an outermost right light source of an object, is moving toward a vehicle (F₂) or moving forward in front of the vehicle (F₁) in the direction of the vehicle,
- the control device (10), based on the first signals, generates a control signal for the right headlamp (50) and a control signal for the left headlamp (40) of the vehicle (F₁) for adjusting the vertical cut-off lines,
- that, in turn, can be used to adjust a right vertical cut-off line and a left vertical cut-off line to suppress the glare of the object, wherein
- the control device uses a third input (14) to read in a third signal, which displays the road in front of the vehicle and
- the control device is suitable and set up to detect if the object is on the road and,
- if the object is not on the road, detects if the object is far away from the road, i.e. if the distance of the object from the road in front of the vehicle exceeds a previously defined value, and,
- if the object is both not on the road and is not far away from the road, the control device (10) aligns the control system of the cut-off line of the headlamp where the object on which glare is to be suppressed is located in relation to the longitudinal axis of the vehicle with the object and the cut-off line of the headlamp on which the side facing away from the object in relation to the longitudinal axis of the vehicle is aligned with the road in front of the vehicle and,
- if the object is both not on the road and is far away from the road, the control device (10) aligns deactivates the control system of the cut-off line of the headlamp where the object on which glare is to be suppressed is located in relation to the longitudinal axis of the vehicle, i.e. the corresponding headlamp (40, 50) is set to an alternative light distribution and the cut-off line of the headlamp on which the side facing away from the object in relation to the longitudinal axis of the vehicle is aligned with the road in front of the vehicle.

4. Method for controlling vertical cut-off lines for vehicle headlamps, where
- the control device (10) uses a first input (12) to read in first signals, which specify the directions in relation to the longitudinal axis (I) of the vehicle (F₁), in which, in front of the vehicle, (F₁) a left edge of an outermost left light source and a right edge of an outermost right light source of an object is moving toward a vehicle (F2) or moving forward in front of the vehicle (F₁) in the direction of the vehicle,
- the control device (10), based on the first signals, generates a control signal for the right headlamp (50) and a control signal for the left headlamp (40) of the vehicle (F₁) for adjusting the vertical cut-off lines,
- that, in turn, can be used to adjust a right vertical cut-off line and a left vertical cut-off line to suppress the glare of the object, wherein
- the control device uses a third input (14) to read in a third signal, which displays the road in front of the vehicle and
- the control device detects if the object is on the road and,
- if the object is not on the road, the control device detects if the brightness in front of the vehicle is sufficient, if the cut-off line of the headlamp where the object is located in relation to the longitudinal axis of the vehicle is aligned with the object and the cut-off line of the other headlamp is aligned with the road and,
- if the object is not on the road and the brightness is sufficient, the control device (10) aligns the control system of the cut-off line of the headlamp where the object on which glare is to be suppressed is located in relation to the longitudinal axis of the vehicle, is aligned with the object and the cut-off line of the headlamp on which the side facing away from the object in relation to the longitudinal axis of the vehicle is aligned with the road in front of the vehicle and,
- if the object is not on the road and the brightness is not sufficient, the control system (10) of the cut-off line of the headlamp where the object on which glare is to be suppressed is located in relation to the longitudinal axis of the vehicle deactivates, i.e. the corresponding headlamp (40, 50) is set to an alternative light distribution and the cut-off line of the headlamp on which the side facing away from the object in relation to the longitudinal axis of the vehicle is aligned with the road in front of the vehicle.

5. Method in accordance with Claim 3 or 4, wherein, if the object is on the road in front of the vehicle, the control device aligns the cut-off line of both headlamps with the object, i.e. the vertical cut-off line of the right headlamp is positioned based on the direction of the right edge of an outermost right light source and the vertical cut-off line of the left headlamp is positioned based on the direction of the left edge of an outermost left light source of the object.

## Revendications

1. Dispositif pour commander des coupures clair-obscur verticales dans le cas des projecteurs d'un véhicule automobile,
- le dispositif de commande (10) présentant une première entrée (12) pour des premiers signaux qui indiquent les directions relatives à un axe longitudinal (I) du véhicule automobile (F₁) dans lesquelles devant le véhicule automobile (F₁) un bord gauche d'une source de lumière la plus à gauche possible et un bord droit d'une source de lumière la plus à droite possible d'un objet, surtout d'un véhicule (F₂) se déplacent en sens inverse par rapport au véhicule automobile ou se déplacent devant le véhicule automobile (F₁) dans la même direction,
- le dispositif de commande étant approprié et configuré à engendrer un signal de réglage pour le projecteur droit (50) et un signal de réglage pour le projecteur gauche (40) du véhicule (F₁) pour régler les coupures clair-obscur verticales en fonction des premiers signaux,
- avec lequel une coupure clair-obscur verticale droite et une coupure clair-obscur verticale gauche pouvant être réglées pour le non-éblouissement de l'objet,
**caractérisé en ce**
- **que** le dispositif de commande (10) présente une troisième entrée (14) pour un troisième signal qui indique le tracé de la route devant le véhicule automobile et
- **que** le dispositif de commande (10) est approprié et configuré à constater si l'objet se trouve sur le tracé de la route ou non,
- **que**
∘ soit le dispositif de commande (10) est approprié et configuré à constater en cas d'un objet qui ne se trouve pas sur le tracé de la route si l'objet se trouve très éloigné de la tracé de route ou non, c'est-à-dire si la distance de l'objet par rapport au tracé de la route devant le véhicule automobile dépasse une valeur prédéterminée ou non,
- et **que** le dispositif de commande (10) est approprié et configuré
∘ en cas d'un objet qui d'un part ne se trouve pas sur le tracé de la route et d'autre part ne se trouve pas très éloigné du tracé de la route à orienter la coupure clair-obscur du projecteur dont l'objet se trouve sur son côté par rapport à l'axe longitudinal du véhicule automobile en fonction des premiers signaux et à déterminer l'autre coupure clair-obscur en fonction du troisième signal et
∘ en cas d'un objet qui d'un part ne se trouve pas sur le tracé de la route et d'autre part se trouve très éloigné du tracé de la route à désactiver la commande de la coupure clair-obscur du projecteur dont l'objet se trouve sur son côté par rapport à l'axe longitudinal du véhicule automobile, c'est-à-dire de régler le projecteur correspondant (40, 50) à une répartition lumineuse alternative et de déterminer l'autre coupure clair-obscur en fonction du troisième signal.

2. Dispositif pour commander des coupures clair-obscur verticales dans le cas des projecteurs d'un véhicule automobile,
- le dispositif de commande (10) présentant une première entrée (12) pour des premiers signaux qui indiquent les directions relatives à un axe longitudinal (I) du véhicule automobile (F₁) dans lesquelles un bord gauche d'une source de lumière la plus à gauche possible et un bord droit d'une source de lumière la plus à droite possible d'un objet, surtout d'un véhicule (F₂) se déplacent en sens inverse par rapport au véhicule automobile ou se déplacent devant le véhicule automobile (F₁) dans la même direction,
∘ le dispositif de commande étant approprié et configuré à engendrer un signal de réglage pour le projecteur droit (50) et un signal de réglage pour le projecteur gauche (40) du véhicule (F₁) pour régler les coupures clair-obscur verticales en fonction des premiers signaux,
∘ avec lequel une coupure clair-obscur verticale droite et une coupure clair-obscur verticale gauche peuvent être réglées pour le non-éblouissement de l'objet,
**caractérisé en ce**
- **que** le dispositif de commande (10) présente une troisième entrée (14) pour un troisième signal qui indique le tracé de la route devant le véhicule automobile et
- **que** le dispositif de commande (10) est approprié et configuré à constater si l'objet se trouve sur le tracé de la route ou non,
- **que**
∘ le dispositif de commande (10) est approprié et configuré à constater en cas d'un objet qui ne se trouve pas sur le tracé de la route si la luminosité à l'avant du véhicule automobile est suffisante ou non lorsque la coupure clair-obscur du projecteur dont l'objet se trouve sur son côté par rapport à l'axe longitudinal du véhicule automobile est positionnée selon l'objet et la coupure clair-obscur de l'autre projecteur est positionnée selon le tracé de la route,
- et **que** le dispositif de commande (10) est approprié et configuré
∘ en cas d'un objet qui d'un part ne se trouve pas sur le tracé de la route et d'autre part la luminosité à l'avant du véhicule est suffisante à orienter la coupure clair-obscur du projecteur dont l'objet se trouve sur son côté par rapport à l'axe longitudinal du véhicule automobile en fonction des premiers signaux et à déterminer l'autre coupure clair-obscur en fonction du troisième signal et
∘ en cas d'un objet qui d'un part ne se trouve pas sur le tracé de la route et d'autre part la luminosité à l'avant du véhicule automobile est insuffisante à désactiver la commande de la coupure clair-obscur du projecteur dont l'objet se trouve sur son côté par rapport à l'axe longitudinal du véhicule automobile, c'est-à-dire de régler le projecteur correspondant (40, 50) à une répartition lumineuse alternative et de déterminer l'autre coupure clair-obscur en fonction du troisième signal.

3. Procédé pour commander des coupures clair-obscur verticales dans le cas des projecteurs d'un véhicule automobile,
- le dispositif de commande (10) réalisant la lecture des premiers signaux à l'intermédiaire d'une première entrée (12) qui indiquent les directions relatives à un axe longitudinal (I) du véhicule automobile (F₁) dans lesquelles devant le véhicule automobile (F₁) un bord gauche d'une source de lumière la plus à gauche possible et un bord droit d'une source de lumière la plus à droite possible d'un objet, surtout d'un véhicule (F₂) se déplacent en sens inverse par rapport au véhicule automobile ou se déplacent devant le véhicule automobile (F₁) dans la même direction,
- le dispositif de commande (10) en fonction des premiers signaux engendrant un signal de réglage pour le projecteur droit (50) et un signal de réglage pour le projecteur gauche (40) du véhicule automobile (F₁) pour régler les coupures clair-obscur verticales,
- avec lequel une coupure clair-obscur verticale droite et une coupure clair-obscur verticale gauche pouvant être réglées pour le non-éblouissement de l'objet,
**caractérisé en ce**
- **que** le dispositif de commande réalise la lecture d'un troisième signal à l'intermédiaire d'une troisième entrée (14) qui indique le tracé de la route devant le véhicule automobile et
- **que** le dispositif de commande constate si l'objet se trouve sur le tracé de la route ou non,
- **que** le dispositif de commande constate lorsque l'objet ne se trouve pas sur le tracé de la route si l'objet se trouve très éloigné de la tracé de route ou non, c'est-à-dire si la distance de l'objet par rapport au tracé de la route devant le véhicule automobile dépasse une valeur prédéterminée ou non,
- **que** le dispositif de commande (10) dans le cas où l'objet d'un part ne se trouve pas sur le tracé de la route et d'autre part **soit** l'objet ne se trouve pas très éloigné du tracé de la route oriente la commande de la coupure clair-obscur du projecteur dont l'objet à ne pas éblouir se trouve sur son côté par rapport à l'axe longitudinal du véhicule automobile selon l'objet et oriente la coupure clair-obscur du projecteur sur le côté opposé à l'objet par rapport à l'axe longitudinal du véhicule automobile selon le tracé de la route devant le véhicule automobile,
- **que** le dispositif de commande (10) dans le cas où l'objet d'un part ne se trouve pas sur le tracé de la route et d'autre part **soit** l'objet se trouve très éloigné du tracé de la route désactive la commande de la coupure clair-obscur du projecteur dont l'objet se trouve sur son côté par rapport à l'axe longitudinal du véhicule automobile, c'est-à-dire de régler le projecteur correspondant (40, 50) à une répartition lumineuse alternative et oriente la coupure clair-obscur du projecteur sur le côté opposé à l'objet par rapport à l'axe longitudinal du véhicule automobile selon le tracé de la route devant le véhicule automobile.

4. Procédé pour commander des coupures clair-obscur verticales dans le cas des projecteurs d'un véhicule automobile,
- le dispositif de commande (10) réalisant la lecture des premiers signaux à l'intermédiaire d'une première entrée (12) qui indiquent les directions relatives à un axe longitudinal (I) du véhicule automobile (F₁) dans lesquelles devant le véhicule automobile (F₁) un bord gauche d'une source de lumière la plus à gauche possible et un bord droit d'une source de lumière la plus à droite possible d'un objet, surtout d'un véhicule (F₂) se déplacent en sens inverse par rapport au véhicule automobile ou se déplacent devant le véhicule automobile (F₁) dans la même direction,
- le dispositif de commande (10) en fonction des premiers signaux engendrant un signal de réglage pour le projecteur droit (50) et un signal de réglage pour le projecteur gauche (40) du véhicule automobile (F₁) pour régler les coupures clair-obscur verticales,
- avec lequel une coupure clair-obscur verticale droite et une coupure clair-obscur verticale gauche pouvant être réglées pour le non-éblouissement de l'objet,
**caractérisé en ce**
- **que** le dispositif de commande réalise la lecture d'un troisième signal à l'intermédiaire d'une troisième entrée (14) qui indique le tracé de la route devant le véhicule automobile et
- **que** le dispositif de commande constate si l'objet se trouve sur le tracé de la route ou non,
- **que** le dispositif de commande constate lorsque l'objet ne se trouve pas sur le tracé de la route si la luminosité à l'avant du véhicule est suffisante ou non, lorsque la coupure clair-obscur du projecteur dont l'objet se trouve sur son côté par rapport à l'axe longitudinal du véhicule automobile est positionnée selon l'objet et la coupure clair-obscur de l'autre projecteur est positionnée selon le tracé de la route,
- **que** le dispositif de commande (10) dans le cas où l'objet d'un part ne se trouve pas sur le tracé de la route et d'autre part la luminosité est suffisante oriente la commande de la coupure clair-obscur du projecteur dont l'objet à ne pas éblouir se trouve sur son côté par rapport à l'axe longitudinal du véhicule automobile selon l'objet et oriente la coupure clair-obscur du projecteur sur le côté opposé à l'objet par rapport à l'axe longitudinal du véhicule automobile selon le tracé de la route devant le véhicule automobile,
- **que** le dispositif de commande (10) dans le cas où l'objet d'un part ne se trouve pas sur le tracé de la route et d'autre part la luminosité est insuffisante désactive la commande de la coupure clair-obscur du projecteur dont l'objet à ne pas éblouir se trouve sur son côté par rapport à l'axe longitudinal du véhicule automobile, c'est-à-dire de régler le projecteur correspondant (40, 50) à une répartition lumineuse alternative et à orienter la coupure clair-obscur du projecteur sur le côté opposé à l'objet par rapport à l'axe longitudinal du véhicule automobile selon le tracé de la route devant le véhicule automobile.

5. Procédé selon la revendication 3 ou 4, **caractérisé en ce que** si l'objet se trouve dans le tracé de la route à l'avant du véhicule automobile le dispositif de commande oriente les coupures clair-obscur des deux projecteurs selon l'objet, c'est-à-dire de poser la coupure clair-obscur verticale du projecteur droit basée sur la direction du bord droit d'une source de lumière la plus à droite possible et la coupure clair-obscur verticale du projecteur gauche basée sur la direction du bord gauche d'une source de lumière la plus à gauche possible de l'objet.
